# EUROPEAN PATENT APPLICATION

(11) **EP 1 669 946 A2**
(43) Date of publication of application: **14.06.2006**
(21) Application number: 05253386.6
(22) Date of filing: 02.06.2005
(51) Int. Cl.: G07F 7/00

(54) **Radio frequency identification (RFID) system**

(30) Priority: 07.12.2004 US 5716
(71) Applicant: NCR INTERNATIONAL INC., Dayton, Ohio 45479 (US)
(72) Inventor: White, Daniel Frederick, Lilburn Georgia 30047 (GE); Martin, Desmond Anthony, Duluth Georgia 30097 (US)
(74) Representative: Williamson, Brian

(57) **Abstract**

A method of interrogating an RFID label utilises an RFID interrogation system operable by a vendor. The method comprises the steps of: transmitting an interrogation signal which is receivable by RFID labels within an area so as to interrogate any RFID labels in that area. An intelligible return signal from the RFID label is only received when the RFID label was issued by the same vendor.

## Description

The present invention relates to radio frequency identification (RFID) systems, and more specifically to a method of ensuring the confidentiality of a customer once he or she brings an RFID label out of the store from where the item to which the label is attached was first purchased.

RFID technology provides an alternative to bar code reader technology for distinguishing and recording items for purchase. RFID may result in labour savings to retailers, since it may make obsolete conventional methods of identifying products.

Some of the uses of RFID technology are disclosed in U.S. Pat. No. 6,019,394 assigned to the assignee of the present invention

RFID labels may be permanently attached to products. RFID labels permanently attached to clothing and other items may be worn or carried by customers into stores long after they were originally purchased. These RFID labels may be detected by RFID interrogators within stores or other locations regardless of whether or not the owners of those interrogators have any right to access the information on those labels.

Due to the increasing near ubiquitous spread of RFID labels and scanning systems, privacy groups such as CASPIAN (Consumers Against Supermarket Privacy Invasion) have begun heralding RFID as spy chips and have raised consumer concern over potential privacy implications of the technology. Most of the concern involves item level tagging.

Therefore, it would be desirable to help alleviate consumer concern if it were possible to prevent unauthorised interrogation of RFID tags, whilst still maintaining their usefulness, for example, when returning unwanted or malfunctioning purchases to a store.

According to a first aspect of the present invention there is provided a method of interrogating an RFID label, utilising an RFID interrogation system operable by a vendor, the method comprising the steps of: transmitting an interrogation signal which is receivable by RFID labels within an area so as to interrogate any RFID labels in that area; and only receiving an intelligible return signal from an RFID label when the RFID label was issued by the same vendor.

Preferably, the returned data is encrypted. Most preferably, the method of encryption is chosen from the following: public key; private key; DES; Triple DES or RSA.

Alternatively, the information includes only a reference number which can only be usefully interpreted by the vendor who issued the label.

In a further alternative no signal is returned by the label if interrogated by an interrogator which is not part of the RFID system operated by the vendor who issued the label.

Preferably the information includes customer specific information. Most preferably, the information includes information on the item which is purchased.

Preferably, the area is a store or Mall.

According to a second aspect of the present invention an RFID system including one or more RFID labels attached to one or more products, an RFID interrogator; and a computer which collates any information obtained from the one or more RFID labels, the one or more RFID labels being programmed such that access to information stored thereon can be gained only by an authorised RFID interrogator.

Preferably, an authorised RFID interrogator is an RFID interrogator operated by the same vendor who issued the RFID label.

According to a third aspect of the present invention there is provided an RFID label arranged such that access to information stored thereon can be gained only by an authorised RFID system.

Preferably the authorised system is the system which is operated by the vendor who issued the label.

In one embodiment data thereon is encrypted. Most preferably, the method of encryption is chosen from the following: public key; private key; DES; Triple DES or RSA.

Alternatively, the information includes only a reference number which can only be usefully interpreted by the vendor who issued the label.

In a further embodiment no signal is returned by the label if interrogated by an interrogator which is not part of the RFID system operated by the vendor who issued the label.

Embodiments of the present invention will now be described, by way of example, with reference to the accompanying drawings, in which:
FIG. 1 is a block diagram of a transaction processing system; and
FIG. 2 is a flow diagram illustrating the method of operation of the system of Fig. 1 in accordance with the present invention.

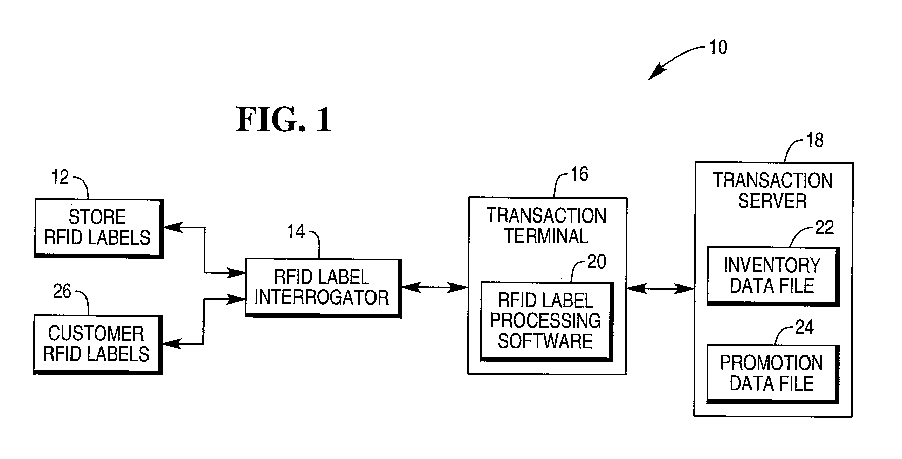

Referring now to FIG. 1, transaction system 10 primarily includes RFID label interrogator 14, terminal 16, and server 18. This system can at present be used, as described below, to read an RFID label on a customer's purchases from a first store as the customer walks, for example, through a Mall or a second unrelated store.

In the latter example an in-store RFID interrogator 14 emits a signal and receives return signals from nearby store RFID labels 12 and customer RFID labels 26. RFID interrogator 14 decodes the return signals and provides information from store RFID labels 12 and customer RFID labels 26 to terminal 16.

The RFID labels 12 and 26 store a serial number attached to the RFID tag, with all the details which are pertinent to the product and its purchase are stored on a server (either in store or on the web), in line with EPC Global standard for RFID. Alternatively, the RFID labels 12 and 26 can store label and product identification information and various amounts of additional information, such as date and time of purchase, location of purchase, and seller. The additional information is stored at checkout.

Terminal 16 uses RFID interrogator 14 to read store RFID labels 12 and customer RFID labels 26. Terminal 16 may include a checkout transaction terminal, a return station computer, or a kiosk computer.

Terminal 16 executes RFID label processing software 20, which determines whether customer RFID label 26 is associated with an item from another store for which no purchase has been recorded within customer RFID label 26. Identification information for store RFID labels 12 is stored in inventory data file 22. If customer RFID label 26 contains store information for a different store but fails to contain purchase information, then the associated item may be considered stolen, for example.

If customer RFID label 26 contains purchase information from the other store, then RFID label processing software 20 may additionally deliver promotions based upon detected item information in customer RFID label 26 using promotion data file 24.

Transaction server 18 handles price and inventory requests from terminal 16. Transaction server 18 also provides promotion information from promotion data file 24.

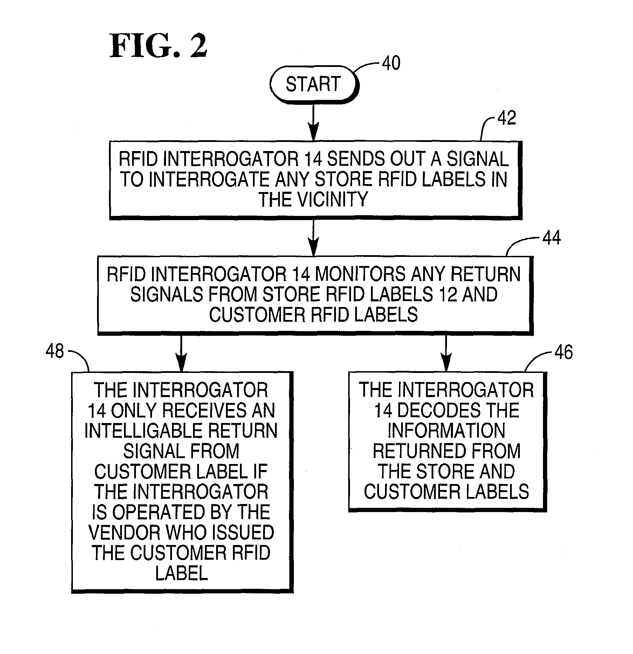

In FIG. 2, a method of operation of the RFID system 10 of FIG. 1 in accordance with the present invention is illustrated in more detail beginning with START 40.

In step 42, RFID interrogator 14 sends out a signal to interrogate any RFID labels in the vicinity. The signal may be sent in response to an operator command or trigger or by a signal from a proximity sensor, similar to barcode readers.

If terminal 16 is a checkout station computer, then RFID interrogator 14 interrogates store RFID labels 12 on items to be purchased and customer RFID labels 26 on items carried or worn by the customer.

If terminal 16 is a return station computer, then RFID interrogator 14 interrogates customer RFID labels 26 on items to be returned and customer RFID labels 26 on other items carried or worn by the customer.

If terminal 16 is a kiosk, then RFID interrogator 14 interrogates store RFID labels 12 on items presented by the customer for price check and customer RFID labels 26 on items carried or worn by the customer.

In prior art systems, as illustrated instep 44, RFID interrogator 14 receives return signals from store RFID labels 12 and customer RFID labels 26. Thereafter, in step 46, RFID interrogator 14 decodes the information from store RFID labels 12 and customer RFID labels 26 (regardless of the store from whence the label originated) and sends the decoded information to terminal 16.

That information may only be a serial number stored in the RFID labels 12 and 26, with all the details which are pertinent to the product and its purchase being stored on a server (either in store or on the web), in line with EPC Global standard for RFID. Alternatively, the information may include product identification information and various amounts of additional information, such as date and time of purchase, location of purchase, and seller.

This allows information to be obtained by users of the RFID system who do not have any right to that information.

However, in accordance with the present invention, after the RFID interrogator 14 sends out a signal to interrogate any RFID labels in the vicinity, step 42, either no return signal is transmitted or the return signal is encrypted or the return signal is a vendor specific code, such as a retailer's transaction number or a receipt number information which is meaningless to the operators of the RFID interrogator in question, step 48, as the number could only be coupled to secure information by the vendor.

If no signal is transmitted that is because the label is arranged to transmit only after receipt of a specific interrogation signal, perhaps including a public key. If no such signal is received then the label is not prompted to transmit information to the interrogator. Alternatively, the label may always send information, but that information will be encrypted such that it can not be read by unauthorised users or it may be an un-encrypted but vendor specific reference number as described above. If encryption is utilised any of a number of standard systems may be employed, including, but not limited to, public key or private key encryption process. DES, Triple DES, RSA.

Although the present invention has been described with particular reference to certain preferred embodiments thereof, variations and modifications of the present invention can be effected within the scope of the following claims.

## Claims

1. A method of interrogating an RFID label, utilising an RFID interrogation system operable by a vendor, the method comprising the steps of: transmitting an interrogation signal which is receivable by RFID labels within an area so as to interrogate any RFID labels in that area; and only receiving an intelligible return signal from an RFID label when the RFID label was issued by the same vendor.

2. A method as claimed in claim 1, wherein the returned data is encrypted.

3. A method as claimed in claim 2, wherein the method of encryption is chosen from the following: public key; private key; DES; Triple DES or RSA.

4. A method as claimed in any of claims 1 to 3, wherein the information includes only a vendor specific reference number which can only be usefully interpreted by the vendor who issued the label.

5. A method as claimed in any preceding claim, wherein no signal is returned by the label if interrogated by an interrogator which is not part of the RFID system operated by the vendor who issued the label.

6. A method as claimed in any preceding claim, wherein the information includes customer specific information.

7. A method as claimed in any preceding claim, wherein the information includes information on the item which is purchased.

8. An RFID system including one or more RFID labels attached to one or more products, an RFID interrogator; and a computer which collates any information obtained from the one or more RFID labels, the one or more RFID labels being programmed such that access to information stored thereon can be gained only by an authorised RFID interrogator.

9. A system as claimed in claim 8, wherein an authorised RFID interrogator is an RFID interrogator operated by the same vendor who issued the RFID label.

10. An RFID label arranged such that access to information stored thereon can be gained only by an authorised RFID system.

11. An RFID label as claimed in claim 11, wherein the authorised system is the system which is operated by the vendor who issued the label.

12. An RFID label as claimed in claim 11, in which data thereon is encrypted.
